Europäisches Patentamt

European Patent Office

Office européen des brevets

(11) Publication number: **0 266 779 B1**

## EUROPEAN PATENT SPECIFICATION

(45) Date of publication of patent specification: **19.02.92**  (51) Int. Cl.5: **C02F 5/10**

(21) Application number: **87116347.3**

(22) Date of filing: **05.11.87**

The file contains technical information submitted after the application was filed and not included in this specification

(54) **Scale inhibitor.**

(30) Priority: **07.11.86 JP 266074/86**
**02.03.87 JP 48617/87**

(43) Date of publication of application:
**11.05.88 Bulletin  88/19**

(45) Publication of the grant of the patent:
**19.02.92 Bulletin  92/08**

(84) Designated Contracting States:
**BE DE FR GB**

(56) References cited:
**DE-A- 139 980**
**FR-A- 640 465**
**GB-A- 183 371**
**US-A- 1 841 763**

(73) Proprietor: **Katayama Chemical Works Co., Ltd.**
**2-10-15 Higashiawaji Higashiyodogawa-ku Osaka(JP)**

(72) Inventor: **Katayama, Sakae**
**2-10-15, Higashiawaji**
**Higashi-Yodogawa-ku Osaka(JP)**
Inventor: **Tsuda, Atsushi**
**1-21-24, Okutenjin-cho**
**Takatsuki-shi Osaka(JP)**
Inventor: **Hanno, Kenzi**
**2-16, Takatsuka-cho**
**Hirakata-shi Osaka(JP)**

(74) Representative: **Kraus, Walter, Dr. et al**
**Patentanwälte Kraus, Weisert & Partner**
**Thomas-Wimmer-Ring 15**
**W-8000 München 22(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

**Description**

The present invention relates to the use of a partial degradation product of wheat gluten, maize gluten or soya bean protein as scale inhibitor which is capable of preventing or suppressing formation of various scales, especially calcium scale and magnesium scale, in either of a high-temperature water system and a low-temperature water system.

Scale formation in various industrial water systems is a serious problem in either of a high-temperature water system and a low-temperature water system. For instance, when a water system is heated, metal ions such as calcium ion and magnesium ion, dissolved in the water are liable to change into insoluble compounds which deposit as scale on the heat transfer surface, etc. in contact with the water system.

These phenomena are more remarkable in high-temperature water systems such as boiler systems, apparatus systems for utilizing hydrothermal water, etc. and causes troubles such as reduction of thermal efficiency, blocking of water channels, or the like.

On the other hand, it is desired in conventional cooling water systems to save spending the cooling water which is recently in a great demand. In buildings and factories, therefore, those water systems are increasing in which a highly enriched driving is effected by using the cooling water under circulation and reducing the amount of flow-out water to the utmost.

In such water systems, the above-mentioned scales are liable to be formed even if they were low-temperature water systems. Above all, scales due to silica compounds comprising silicate ion bound to calcium or magnesium ion or the like are troublesome because they have a low heat conductivity and remarkably reduce the cooling efficiency even by their cohesion in a small amount.

Further, systems utilizing the subterranean heat meet troubles such as blocking and the like, because when the hydrothermal water containing supersaturated silica flows in hot water pipes on the earth, colloidal silica compounds are formed and cohered on the pipe wall. As the geothermal-power generation utilizing the hydrothermal water flourishes recently, enormous costs for maintenance of renewing hot water pipes, reboring new return wells and the like, are required because of the blocking due to the deposition of silica on the pipe wall, inside the return well for the spent hydrothermal water and inside the bedrock. It is also a difficulty that scales comprising such silica compounds are so hard that once they deposit, they can not easily be removed by mechanical force or by washing with hydrochloric acid or the like.

Several methods for preventing the formation of scales in the high-temperature water systems as mentioned above have been proposed to add inorganic or organic phosphorus compounds, poly(meth)-acrylic acids, polymaleic anhydrides, or the like ("Treatment of Industrial Water" written by Shizuo Suzuki and issued from Uchida Rokakuho Shinsha in Japan, Japanese Patent Publication No. Sho 54-29316, Japanese Patent Publication No. Sho 53-20475 and Japanese Unexamined Patent Publication No. Sho 58-122096).

Further proposed agents for preventing silica compound scales include quaternary ammonium salts (Japanese Unexamined Patent Publication Nos. Sho 57-110398 and Sho 58-223497), nitrogen-containing phosphonic or sulfonic acid derivatives (Japanese Unexamined Patent Publication No. Sho 57-156094), cationic compounds (Japanese Unexamined Patent Publication No. Sho 58-74196), alkyleneoxide derivatives and pyridine derivatives (Japanese Unexamined Patent Publication No. Sho 58-84098), nonionic surfactants (Japanese Unexamined Patent Publication No. Sho 59-39397), or the like.

However, each of the scale inhibitors proposed above dose not fully meet the requirement for industrial use.

That is, each of these scale inhibitors is inherently a chemical, which cannot be said to be fully harmless in health to human bodies, animals and plants, and accordingly cannot be used without safety regards, for example, when the steam from boilers is used directly or indirectly in a step for the treatment of food stuffs (for example, the so-called "Sakamushi" step wherein wet rice is steamed in "Sake" brewery), when the hydrothermal water utilized for hot-spring bathing or for the treatment of food stuffs, or when the fresh water obtained by convenrsion of sea water is provided for drinking.

Moreover, as the waste water containing these chemicals is discharged out of the system, it pollutes river water and sea water and, as a result, a counter-measure to public pollution will be required.

The present invention has been made under such circumstances, and it intends to provide a scale inhibitor which can suppresses or prevents formation of various scales in various water systems effectively and yet is quite safe and harmless even when the water containing the scale inhibitor added thereto or the vapor generating from such water were intaken by human bodies directly or indirectly or when the water and/or the vapor were discharged out of the system.

We have found the fact that grain proteins, which are susceptible to biolysis and yet harmless to living bodies, and their partial degradation products have the function of preventing or suppressing formation of various scales of calcium series and magnesium series, including calcium silicate and magnesium silicate, and also of zinc series, in either of an unhigh-temperature water system and a high-temperature water system.

Although many reports have been made hitherto on the properties of partial degradation products of grain proteins, especially of hydrolyzates by an alkali, acid or enzyme of grain proteins (see for example FR-A-640 465, DE-A-139 980 and GB-A-183 371) there is no report on their anti-scaling effect as far as the inventors of the present invention know.

Accordingly, the present invention provides the use of a partial degradation product of wheat gluten, maize gluten or soya bean protein, having a weight average molecular weight of 700 to 110,000 and having a ratio of Mw after degradation (Mw2) to Mw before degradation (Mw1) of from 0.005 to 0.85 as scale inhibitor.

According to the present invention the formation of scales of calcium and/or magnesium series, such as calcium carbonate, magnesium carbonate, calcium hydroxide, magnesium hydroxide, calcium sulfate, magnesium sulfate, calcium silicate, magnesium silicate, calcium phosphate, etc. can be prevented or suppressed in either of a high-temperature water system and a low-temperature water system. Further, the scale inhibitor used in accordance with the present invention is effective also for preventing or suppressing formation of other scales, such as zinc phosphate, zinc hydroxide, silicic acids, etc. The active ingredients, grain proteins and their partial degradation products, are food stuffs or stuffs similar to food, and so the scale inhibitor used in accordance with the present invention is very advantageous in respect of safety and public pollution and can be used in widespread area.

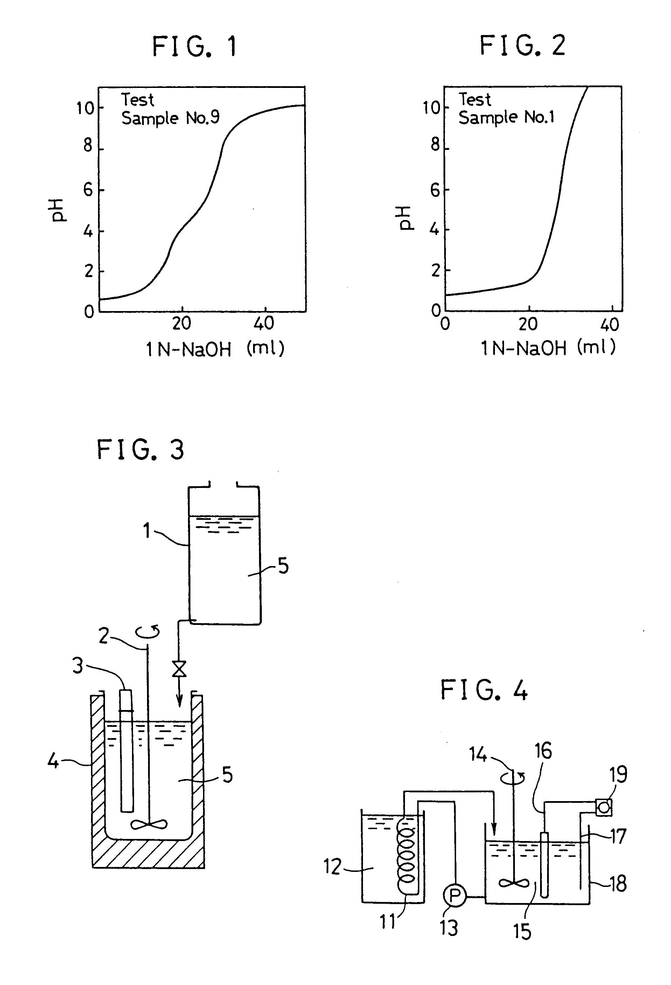

Figures 1 and 2 are each a graph showing the titration curve of the gluten hydrolyzate and gluten used in Examples. Figures 3 and 4 are each a diagram showing the construction of the testing apparatus used in Examples.

The grain protein used in accordance with the present invention means a protein contained in grain. The term "grain" may be also called as the seed of any cereal crop and includes wheat and barley, corns, beans (for example, soya beans) and the like. Among proteins contained in such grains, wheat protein contains glutenin and gliadin as main components and is usually called wheat gluten, and corn protein contains zein as the main component and usually called corn gluten. They each are a known substance which can be obtained from the corresponding grain by separation and extraction according to the usual manner.

For example, to obtain wheat gluten, wheat flour is kneaded stiffly by adding a small amount of water and then kneaded in a large amount of water whereby starch is suspended in water and the gluten-containing portion remains as a sticky lump. By repeating this operation several times while replacing the water with new one, wheat gluten is obtained as a grayish brown sticky lump. In the present invention, although such lump can be used as it is, a product obtained by drying or by further purifying of the lump may also be used. Wheat gluten is commercially available in the form of dry powder. Other commercially available corn gluten, soya beans protein, etc. may also be used in convenience.

These proteins may be used in the form of either crude products or purified products. However, it is preferable to use a product containing the protein in an amount of 70% or more.

The partial degradation product used in the present invention can be prepared by subjecting the abovementioned grain protein to a partial degradation treatment.

The partial degradation herein means to degrade a part of many acid amide bonds and -S-S- bonds in the grain protein molecules by means of an acid, alkali or enzyme, or by means of an oxidizing agent or reducing agent, into a lower molecular polypeptide mixture.

Although it is a matter of course that partial degradation products of a low degradation degree having properties near the grain protein have an anti-scaling effect similar to the grain protein, it has been noted that partial degradation products of a higher degradation degree exhibit an anti-scaling effect higher than the grain protein and can be used especially effectively in the present invention. However, if the degradation degree is too high, the resulting products comprise substantially amino acids and oligopeptides and are not suitable because their anti-scaling effect lowers.

Thus, partial degradation products having a weight average molecular weight of 700 or more are suitable, those of 700 - 110000 are preferable and those of 2500 - 110000 are more preferable. The values of these molecular weights are determined by gel filtration method using sodium polystyrenesulfonates having a molecular weight of 1600, 6500, 16000, 65000 or 88000, as the standard substance, and Sephadex G-75 or G-100 (from Pharmacia Ltd.) as the carrier.

The partial degradation treatment can be effected by subjecting the grain protein as mentioned above to a hydrolysis using an alkali, acid or enzyme, or to a reductive or oxidative degradation using a reducing agent or an oxidizing agent.

3

The hydrolysis with alkali is suitably effected by heating the subject in a dilute aqueous alkaline solution. Usually, it is suitable to heat an aqueous solution or dispersion of the subject to be degraded at ca. 60 - 180°C for ca. 10 - 600 minutes while stirring in the presence of an alkaline agent such as sodium hydroxide, potassium hydroxide, calcium hydroxide, sodium carbonate, potassium carbonate, etc. As the aqueous solution or dispersion of the subject to be degraded, one containing 2 - 40% by weight of the subject is preferably used. The amount of an alkaline agent used is preferably 0.1 - 6g per 20g of the subject to be degraded.

The hydrolysis with acid is suitably effected by heating the subject in a dilute aqueous acid solution. Usually, it is suitable to heat an aqueous solution or dispersion of the subject to be degraded at ca. 60 - 120°C for ca. 10 - 600 minutes while stirring in the presence of an inorganic acid such as hydrochloric acid, sulfuric acid, nitric acid, etc. or an organic acid such as acetic acid or the like. The quantitative conditions here are preferably the same as those mentioned above for the alkaline hydrolysis.

The hydrolysis with enzyme is suitably effected in a dilute aqueous solution of an enzyme having protease activity. Usually, it is effected by keeping an aqueous solution or dispersion of the subject to be degraded at ca. 10 - 60°C for ca. 60 - 600 minutes in the presence of a small amount of an enzyme such as pepsin, alkali protease, papain, etc. under the optimal pH condition for the enzyme. The quantitative conditions here are preferably the same as those described above, except that 0.02 - 5g of the enzyme is used per 20g of the subject to be degraded.

The degradation with reducing or oxidizing agent is suitably effected in a dilute aqueous solution of a reducing agent or an oxidizing agent. Usually, it is effected by keeping an aqueous solution or dispersion of the subject to be degraded at ca. 10 - 100°C for ca. 10 - 600 minutes in the presence of a small amount of a reducing agent such as a sulfite, a thiol compound, erysorbic acid, hydrazine, etc. or an oxidizing agent such as hydrogen peroxide, a hypochlorite, etc. The quantitative conditions here are preferably the same as those described above, except that 0.1 - 5g of the reducing agent or the oxidizing agent is used per 20g of the subject to be degraded.

Although each of the above-mentioned degradation treatments can be performed independently, two or more sorts of the degradation treatments may be performed in combination. According to the inventors' findings, a degradation product obtained by a two-step degradation treatment consisting of a combination of (A) an indispensable degradation treatment with alkali with (B) a degradation treatment with anyone of acid, enzyme, oxidizing agent and reducing agent, is a novel degradation product which is different from hitherto known degradation products and is one of the partial degradation products suitably used in the present invention. Such novel partial degradation product of protein are characterized by the following properties:

(a) Their weight average molecular weight (according the Gel filtration method) is in the range of 700 - 90000.

(b) Their ultraviolet absorption max is found near 260 - 280 nm, and their infrared absorption is found near 1400, 1630 and 3400 $cm^{-1}$.

(c) Their isoelectric point is in the range of pH 3.9 - 5.0.

(d) They have a buffer action (2 - 25 ml of 1N-hydrochloric acid is required for lowering the pH of 100 ml of their 5% (by weight) aqueous solution from 6 to 2).

(e) They are soluble in water and insoluble in methanol, ethanol, acetone and ether.

(f) Their appearance is pale yellow - red brown colored powder.

(g) They show coloration in Xanthoprotein reaction and Ninhydrin reaction.

(h) They have a strong capacity of reducing surface tension (the surface tension of pure water at 25°C is reduced to 50 dyne/cm or less (measured with du Noüy's tensiometer), by adding 0.1% (by weight) of them to the pure water).

(i) They have a strong emulsifying capacity (100 g of a mixture of water and soya bean oil, containing at least 30% (by weight) of soya bean oil, can be emulsified completely (uniformly emulsified state is maintained at least for 10 minutes, preferably for 1 hour or more), by adding 1g of them to the mixture).

Such partial degradation products are differentiated from known partial degradation products of grain protein, especially in respect of the above-mentioned (h) capacity of reducing surface tension and (i) emulsifying capacity.

There is no limitation in the sequence of performing each step in the above-mentioned multi-step degradation treatment. That is, the starting material such as wheat gluten may be subjected first to the alkali degradation treatment (A) and then to the degradation treatment (B) using acid, enzyme, reducing agent or oxidizing agent (degradation treatment with an agent except alkali) or two or more of the degradation treatments (B). These degradation treatments may be performed also in reverse order. It is also possible to obtain the partial degradation product by subjecting the starting material first to the degradation treatment with an agent except alkali (B) and then to the degradation treatment with alkali (A) and again to the degradation treatment with an agent except alkali (B). Further, a neutralization treatment may be effected between these treatments.

In the present invention, the grain protein or its partial degradation product can be used by adding it to the objective water system in the form of powder or of an aqueous medium, preferably an aqueous solution, containing it in a suitable concentration. In the case of a hydrolysis product, however, it is also possible to use the liquor formed by the hydrolysis reaction, as it is. When the grain protein or its partial degradation product is processed into an aqueous preparation, there is no special limitation on the liquid property of the preparation. However, an alkaline preparation is one of preferred embodiments, in respect of suppressing putrefaction of the grain protein or its degradation products.

The scale inhibitor of the present invention is useful for the prevention of scales of calcium/magnesium series in a high-temperature water system. The high-temperature water system here means a water system in an industrial plant or manufacturing apparatuses such as general middle or low pressure boilers, apparatuses for converting sea water into fresh water, apparatuses utilizing hydrothermal water, etc., which is drived under heating at a high-temperature range of 80 - 250$^\circ$C, preferably of 100 - 200$^\circ$C.

The amount of the grain protein or its partial degradation product to be added effectively to the water system cannot be regulated discriminately, because it must be required depending on the water condition and temperature of the water in the objective water system and on the sort of scales to be prevented.

For example, the amount of a gluten partial degradation product required for effectively preventing generation of calcium carbonate scale in a boiler drived at ca. 183$^\circ$C using a boiler water containing ca. 60 mg/$\ell$ of hardness ingredients is 5.0 mg/$\ell$ or more, preferably 20 mg/$\ell$ or more. When a gluten partial degradation product is used for preventing calcium carbonate scale and/or magnesium hydroxide scale in an apparatus for converting sea water into fresh water, which is drived at ca. 100$^\circ$C, a concentration of 0.1 mg/$\ell$ or more is suitable and a concentration of 1.0 mg/$\ell$ or more is preferred. When a boiler is drived at a high-temperature of 200 - 250$^\circ$C, or when a boiler is drived with a boiler water containing salts in a high concentration, it is requested as a matter of course to increase the effective amount, relatively. In the case of apparatuses for converting sea water into fresh water, it is requested as a matter of course to change the amount of addition, depending on the concentration ratio of the sea water, the temperature of driving, and other conditions. However, with respect to either of the grain protein and its partial degradation product, any merit overcoming the economical disadvantage cannot be expected by adding the grain protein or its partial degradation product in a large amount of 1000 mg/$\ell$ or more.

Thus, the suitable amount of addition into a high-temperature water system is 0.1 - 1000 mg/$\ell$ and, in order to surely prevent or suppress also those scales of silica series, such as calcium silicate and magnesium silicate, an amount of 0.2 - 1000 mg/$\ell$ is suitable and an amount of 2 - 1000 mg/$\ell$ is preferred.

The scale inhibitor of the present invention is useful also for the prevention of formation of scales in a low-temperature water system wherein water of a temperature below the above-mentioned high-temperature range is used. As object of such low-temperature water system, general cooling water systems can be mentioned. The amount of active ingredients to be added to the low-temperature water system is suitably 0.2 - 200 mg/$\ell$, preferably 1 - 100 mg/$\ell$.

In the present invention, there is compatibility in the combined use of the grain protein with its partial degradation product. Moreover, other known agents may also be used in combination with the grain protein and/or its partial degradation product. As such agents used in combination, there can be mentioned other scale inhibitor such as inorganic or organic phosphorus compounds, polymers of polycarboxylic acid series such as polyacrylates, etc.; anticorrosive agents such as nitrous acid, oxidizing compounds of chromium series, inorganic or organic phosphorus compounds, organic acids such as gluconic acid, tartaric acid, etc. or their salts, polyvalent metal salts, polyacrylic acids, polymaleic acids, etc.; germicides of organonitrogen series, organosulfur series and organobromine series; antiseptics; defoaming agents of silicone series, amide series, wax series and higher alcohol series; and the like.

In the following, the present invention is explained by Examples. The invention, however, shall not be limited to those Examples.

EXAMPLE 1

According to the following prescription, test samples of wheat gluten and its partial degradation product were prepared, and their effects of preventing calcium scale were examined in the manner described hereinafter using an autoclave comparable with high-temperature boilers. The results obtained are shown in Table 2. (Hereinafter, the term "gluten" is used to denote "wheat gluten".)

Preparative example 1 (Preparation of test sample gluten)

A prescribed amount of wheat gluten (reagent grade from Wako Pure Chemicals Ltd. JAPAN; protein purity 71.9 - 79.8%) was added to 2% aqueous solution of sodium hydroxide in pure water and dissolved by well stirring to give an aqueous solution containing 10% of gluten, which was treated as test sample No. 1 (not degraded product).

Preparation examples 2 - 8 (Preparation of test samples of gluten partial degradation products by alkali)

With each 20 mℓ of the test sample No. 1, i.e. an aqueous gluten solution prepared as described above, hydrolysis reaction was performed by heating and stirring under the conditions shown in Table 1. In examples 5 - 8, 1 mℓ of 3N-aqueous sodium hydroxide solution was added before the heating, in order to accelerate the hydrolysis. Thus, test samples Nos. 2 - 8, which were different from one another in the degree of degradation, were obtained.

Table 1

| (Conditions for partial degradation of gluten with alkali) | | | |
|---|---|---|---|
| Test Sample No. | Addition of 3N-NaOH | Temperature ($^\circ$C) | Time (hr) |
| 2 | Not added | 100 | 0.5 |
| 3 | " | " | 1 |
| 4 | " | " | 6 |
| 5 | Added | " | 1 |
| 6 | " | " | 6 |
| 7 | " | 120 | 1 |
| 8 | " | " | 6 |

Gluten partial degradation products of the test samples No. 2 and No. 8 given in Table 1 were found to have a weight average molecular weight of ca. 4400 and of ca. 2500, respectively, as the result of determining the distribution of molecular weight according to the gel filtration method using Sephadex G-75 as filler and sodium polystyrene sulfonates having a molecular weight of 64,000, 16,000, 6,400 and 1,600 as standard substance, by means of a UV photometer.

Test method

A test water having a calcium ion concentration of 24 mg/ℓ and an M alkalinity of 200 mg/ℓ was prepared by adding calcium chloride and sodium bicarbonate to pure water. The liquid obtained had a pH of 8.2. To 2ℓ of the test water taken in an autoclave was added each test sample in a prescribed concentration, and the pH was adjusted again to 8.2. By heating the autoclave, the liquid was maintained at a temperature of 183$^\circ$C (10 kgf/cm$^2$ for 2 hours under stirring.

After cooling, the total calcium concentration (T-Ca) and the total calcium ion concentration (Ca ion) in the test water were determined and the dispersion ratios of the total calcium and the total calcium ion were calculated according to the following formula:

$$\text{Total calcium (or calcium ion) dispersion ratio (\%)} = \frac{\text{Total calcium (or calcium ion) concentration in the test water after the test}}{\text{Total calcium (or calcium ion) concentration in the test water before the test}} \times 100$$

In this test of anti-scaling effect, the natural high-molecular substances, sodium alginate, casein and gelatin, and also the commercially known scale inhibitor, sodium polyacrylate, were examined at the same time for reference, besides the test samples Nos. 1 - 8. The results obtained are shown also in Table 2.

Table 2

| Experiment No. | Material | Concentration (mg/ℓ) | Remaining Concentration (mg/ℓ) | | Dispersion Ratio (%) | |
|---|---|---|---|---|---|---|
| | | | T-Ca | Ca Ion | T-Ca | Ca Ion |
| 1 | Not added | - | 3.6 | 0.8 | 15 | 3 |
| 2 | Test Sample No. 1 | 200 | 18.7 | 13.4 | 78 | 56 |
| 3 | Test Sample No. 2 | 5 | 5.0 | 2.1 | 21 | 9 |
| 4 | " | 10 | 7.2 | 4.7 | 30 | 20 |
| 5 | " | 25 | 9.9 | 5.8 | 41 | 24 |
| 6 | " | 50 | 13.0 | 6.6 | 54 | 28 |
| 7 | " | 100 | 19.6 | 13.9 | 82 | 58 |
| 8 | " | 200 | 23.4 | 18.0 | 98 | 75 |
| 9 | Test Sample No. 3 | " | 21.2 | 16.0 | 88 | 67 |
| 10 | Test Sample No. 4 | " | 19.8 | 14.1 | 82 | 59 |
| 11 | Test Sample No. 5 | " | 19.6 | 14.0 | 82 | 58 |
| 12 | Test Sample No. 6 | " | 15.7 | 10.5 | 65 | 44 |
| 13 | Test Sample No. 7 | " | 18.6 | 13.3 | 78 | 55 |
| 14 | Test Sample No. 8 | " | 13.4 | 8.8 | 56 | 37 |
| 15 | Sodium Alginate | 400 | 6.7 | 1.4 | 28 | 5 |
| 16 | Casein | " | 3.3 | 0.9 | 14 | 4 |
| 17 | Gelatin | " | 3.8 | 1.0 | 1.6 | 4 |
| 18 | Sodium Polyacrylate | 100 | 17.0 | 9.8 | 71 | 41 |
| 19 | " | 200 | 22.8 | 20.1 | 95 | 84 |

Consideration

The test samples No. 1 - No. 8 each showed a good dispersion ratio and their effects were far superior to those of other natural high-molecular substances (sodium alginate, casein and gelatin). Especially, the test sample No. 2 showed the same anti-scaling effect as the hitherto known scale inhibitor, sodium

7

polyacrylate.

EXAMPLE 2

Using the same test water and according to the same test method as Example 1, anti-calcium scaling effect of the test samples No. 1 and No. 2 was examined. In this Example, however, the inside temperature of the autoclave was maintained at 158°C (5 Kgf/cm$^2$ or 200°C (15 Kgf/cm$^2$).

Also in this Examples, sodium alginate, casein and sodium polyacrylate were examined in parallel for reference.

The results obtained are shown in Table 3.

8

Table 3

| Experiment No. | Temperature (°C) (Pressure) | Material | Concentration (mg/ℓ) | Remaining Concentration (mg/ℓ) | | Dispersion Ratio (%) | |
|---|---|---|---|---|---|---|---|
| | | | | T-Ca | Ca Ion | T-Ca | Ca Ion |
| 20 | 158 (5 Kgf/cm²) | Not added | - | 4.8 | 1.0 | 20 | 4 |
| 21 | " | Test Sample No. 1 | 50 | 11.6 | 6.0 | 48 | 25 |
| 22 | " | " | 100 | 16.1 | 9.3 | 67 | 39 |
| 23 | " | Test Sample No. 2 | 50 | 14.5 | 7.2 | 60 | 30 |
| 24 | " | " | 100 | 21.7 | 14.7 | 90 | 61 |
| 25 | " | Sodium Polyacrylate | 50 | 14.4 | 7.0 | 60 | 30 |
| 26 | 200 (15 Kgf/cm²) | Not added | - | 4.6 | 0.7 | 19 | 3 |
| 27 | " | Test Sample No. 1 | 100 | 13.9 | 9.1 | 58 | 38 |
| 28 | " | " | 200 | 16.8 | 10.9 | 70 | 45 |
| 29 | " | Test Sample No. 2 | 100 | 16.1 | 7.6 | 67 | 32 |
| 30 | " | " | 200 | 21.0 | 13.4 | 88 | 56 |
| 31 | " | Sodium Polyacrylate | 100 | 15.8 | 7.4 | 66 | 31 |
| 32 | " | " | 200 | 21.8 | 21.1 | 91 | 88 |
| 33 | " | Sodium Alginate | 400 | 4.5 | 1.0 | 19 | 4 |
| 34 | " | Casein | 400 | 3.8 | 0.8 | 16 | 3 |

Consideration

The test samples No. 1 and NO. 2 both showed a good effect at temperatures of 158°C (5 Kgf/cm²) and 200°C (15 Kgf/cm²), while other natural high-molecular substances, sodium alginate and casein, were alsmost not effective at the same temperatures. The test sample No. 2 showed the anti-scaling effect as the

9

commercially known scale inhibitor, also at these temperatures.

EXAMPLE 3

According to the following prescription, gluten partial degradation products by acid, by enzyme, or by a combination of acid and enzyme, acid and alkali, or enzyme and alkali, were prepared. Then, the effect of preventing calcium scale was examined in an autoclave wherein the test water was maintained at 183°C (10 Kgf/cm$^2$), with respect to an aqueous solution of each partial degradation product.

The test water used and the test method employed were the same as those in Example 1.

The results are shown in Table 4.

Preparative example 9 (Preparation of gluten partial degradation products by acid)

Wheat gluten (reagent grade from Wako Pure Chemicals Ltd.) was added to 2% aqueous hydrochloric acid solution to prepare an aqueous solution containing 10% of gluten, and the hydrolysis reaction was effected by heating the aqueous solution at 100°C for 30 minutes. After cooling, the solution was adjusted to a pH of 4.5 (the isoelectric point) and then filtrated. The precipitates obtained were added to pure water and the pH was adjusted to 7.0, to give an aqueous solution of gluten partial degradation product, the test sample No. 9.

The gluten partial degradation product contained in the test sample No. 9 was found to have a weight average molecular weight of ca. 53,000, as the molecular weight distribution was determined according to the above-mentioned gel filtration method.

In order to know the degree of hydrolysis in the test sample No. 9, the test sample No. 9 and the test sample No. 1 (not degraded product) were adjusted strongly acidic and then titrated with sodium hydroxide. The titration curves obtained are shown in Fig. 1 and Fig. 2.

The two curves are apparently different. The isoelectric point is changed from near the 7 in the test sample 1 to near the 4.5 in the test sample 9. Thus, increase in dissociated groups (carboxyl group and amino group) was recognized.

Preparative example 10 (Preparation of gluten partial degradation products by enzyme)

A prescribed amount of wheat gluten (reagent grade from Wako Pure Chemicals Ltd.) was added to 0.1N aqueous hydrochloric acid solution and dissolved to give an aqueous solution containing 10% of gluten and having a pH of 1.5 (not degraded product). The solution was taken in a flask and pepsin was added to the solution in an amount of 0.1%, and then the hydrolysis reaction was effected at 37°C for 1.5 hours under stirring. by adjusting the pH to neutral, an aqueous solution of gluten partial degradation product by enzyme was obtained and treated as test sample No. 10. The weight average molecular weight was 60000.

Preparative example 11 (Combined application to gluten of a partial degradation by acid and a partial degradation by enzyme)

The aqueous solution of the test sample No. 9 (acid hydrolyzate) was adjusted to pH 1.5 by addition of concentrated hydrochloric acid. Then, pepsin was added to the solution in an amount of 0.1%, and the hydrolysis reaction was effected at 37°C for 1.5 hours under stirring. By adjusting the pH neutral, an aqueous solution of gluten partial degradation product by acid/enzyme was obtained and treated as test sample No. 11. The weight average molecular weight was 33,000.

Preparative example 12 (Combined application to gluten of a partial degradation by acid and a partial degradation by alkali)

To the aqueous solution of the test sample No. 9 (acid hydrolyzate) was added 1.5% of sodium hydroxide, and the hydrolysis reaction was effected at 100°C for 30 minutes under stirring to obtain an aqueous solution of gluten partial degradation product by acid/alkali, which was treated as test sample 12. The weight average molecular weight was 10,500.

Preparative example 13 (Combined application to gluten of a partial degradation by enzyme and a partial degradation by alkali)

To the aqueous solution of the test sample No. 10 (degradation product by enzyme) was added 1.5% of sodium hydroxide, and the hydrolysis reaction was effected at 100°c for 30 minutes under stirring to obtain an aqueous solution of gluten partial degradation product by enzyme/alkali, which was treated as test sample No. 13. The weight average molecular weight was 18,000.

Table 4

| Experiment No. | Material | Concentration (Solid Matters mg/ℓ) | Concentration (mg/ℓ) | | Dispersion Ratio(%) | |
|---|---|---|---|---|---|---|
| | | | T-Ca | Ca Ion | T-Ca | Ca Ion |
| 35 | Test Sample No. 9 | 200 | 19.8 | 13.2 | 82 | 55 |
| 36 | Test Sample No. 10 | " | 19.5 | 13.7 | 81 | 57 |
| 37 | Test Sample No. 11 | " | 19.9 | 14.4 | 83 | 60 |
| 38 | Test Sample No. 12 | " | 23.6 | 18.2 | 98 | 76 |
| 39 | Test Sample No. 13 | " | 23.5 | 17.9 | 98 | 75 |

Consideration

As apparent in Table 4, partial degradation products by acid, enzyme or a combination of acid with enzyme (test sample No. 11), acid with alkali (test sample No. 12) or enzyme with alkali (test sample No. 13), showed a good calcium dispersion ratio.

EXAMPLE 4

With respect to the test sample No. 1 (10% aqueous gluten solution; not degraded) and the test sample No. 2 (a gluten partial degradation product obtained by hydrolysis with alkali at 100°C for 0.5 hour), the anti-scaling effect on calcium carbonate scale and magnesium hydroxide scale was evaluated according to the following method and conditions, by means of a test apparatus as shown in Fig. 3, which was comparable to the model apparatus for converting sea water to fresh water. In Fig. 3, 1 denotes a pit for make-up water, 2 denotes a stirrer, 3 denotes a heater, 4 denotes a heat insulating container and 5 denotes a artificial sea water.

The results obtained are shown in Table 5.

Test method

An artificial sea water preparation (trade name : Aquamarine) from Yashima Yakuhin Ltd. was dissolved in pure water to prepare a artificial sea water having compositions and properties shown in Table 5, which was used as the test water. Each 2ℓ of this test water was taken in the pit for make-up water and the heat insulating container made of glass, and the test water in the heat insulating container was warmed under stirring at a speed of 200 rpm.

The heater used was made of stainless steel and had a surface area of 57 cm$^2$ and a capacity of 350 W.

When the artificial sea water in the heat insulating container began to boil, artificial sea water was supplied continuously from the pit for make-up water so that the amount of liquor in the heat insulating container was maintained at a constant level. Concentrating by heating was completed after 5 hours. The concentration ratio of the test water after completion of addition was ca. 2 times.

After the driving was stopped and the apparatus was allowed to cool, the heater was picked up and the scales adhered to its lower part corresponding to 80% of the total surface area were washed with acid. The amount of calcium and magnesium ions dissolved in the washing liquid was quantitatively analyzed, and the amount of calcium carbonate and magnesium hydroxide which had deposited as scales and the scale inhibiting ratio were calculated according to the following formula.

$$\text{Scale inhibiting ratio \%} = \frac{A - B}{A} \times 100$$

wherein
A : amount (mg) of the calcium carbonate or magnesium hydroxide deposited, without additions
B : amount (mg) of the calcium carbonate or magnesium hydroxide deposited, with additional test samples

Table 5

| Item | Value | Item | Value |
|---|---|---|---|
| pH | 8.2 | Calcium Hardness (CaCO$_3$) ppm | 1,100 |
| Electric Conductivity (μs/cm) | 53,100 | Chloride Ion (ppm) | 22,900 |
| Amount of Acid consumed (pH 8.3) ppm | 0 | Sulfate Ion (ppm) | 2,400 |
| Amount of Acid consumed (pH 4.8) ppm | 170 | Sodium Ion (ppm) | 13,000 |
| Total Hardness (CaCO$_3$) ppm | 7,100 | Total Calcium (ppm) | 470 |

12

Table 6

| Experiment No. | Material | Concentration (Solid Matters mg/ℓ) | Amount of Scales | | Scale inhibiting Ratio (%) | |
|---|---|---|---|---|---|---|
| | | | $CaCO_3$ | $Mg(OH)_2$ | $CaCO_3$ | $Mg(OH)_2$ |
| 40 | Not added | – | 7.5 | 6.0 | – | – |
| 41 | Test Sample No. 1 | 10 | 3.6 | 5.4 | 52 | 10 |
| 42 | " | 20 | 1.9 | 4.8 | 75 | 20 |
| 43 | Test Sample No. 2 | 0.5 | 6.5 | 5.8 | 13 | 3 |
| 44 | " | 5 | 3.8 | 5.4 | 49 | 10 |
| 45 | " | 10 | 3.0 | 5.3 | 60 | 12 |
| 46 | " | 20 | 1.4 | 4.6 | 81 | 23 |
| 47 | Sodium hexametaphophate | 10 | 3.0 | 7.7 | 60 | 0 |
| 48 | " | 20 | 1.5 | 6.0 | 80 | 0 |
| 49 | Sodium Polymaleate | 5 | 0.4 | 1.1 | 95 | 82 |
| 50 | " | 10 | 0.2 | 1.2 | 97 | 80 |

Consideration

Under the conditions of Example 4, scale of calcium carbonate and magnesium hydroxide, which is called alkali scale, deposited.

Both the test samples No. 1 and No. 2 were recognized to be effective, as shown in Table 6. They had the same effect as, or an effect superior than, the effect of the commercially known sodium hexametaphosphate.

Although sodium polymaleate showed a good effect, this chemical is tightly restricted in use as an additive for food.

EXAMPLE 5

The anti-scaling effect of the test sample No. 2 was evaluated, according to the same test method and by means of the same test apparatus as Example 4.

According to the inventors' preliminary test (not described herein), it was confirmed that, although only scales of calcium carbonate and magnesium hydroxide were observed as the concentrating of artificial sea water reached upto 2 times in concentration ratio, scale of calcium sulfate also began to form as following overconcentration higher than 2 times. Therefore, in this Example, the effect of preventing scales of calcium carbonate, magnesium hydroxide and calcium sulfate was evaluated according to the test method described in Example 4, with modification that the concentrating ratio of the test water after completion of addition was allowed to 4 times by elongated testing time.

The results are shown in Table 7.

Table 7

| Experiment No. | Material | Concentration (Solid Matters mg/ℓ) | Amount of Scales (mg) | | | Scale Inhibiting Ratio (%) | | |
|---|---|---|---|---|---|---|---|---|
| | | | $CaCO_3$ | $Mg(OH)_2$ | $CaSO_4 1/2H_2O$ | $CaCO_3$ | $Mg(OH)_2$ | $CaSO_4 1/2H_2O$ |
| 51 | Not added | - | 77.2 | 13.2 | 9.6 | - | - | - |
| 52 | Test Sample No. 2 | 20 | 15.5 | 7.7 | 0.1 | 80 | 42 | 99 |

EXAMPLE 6

With the test sample No. 1 which is the gluten prepared in Example and the test samples of gluten partial degradation products prepared according to the following prescription, the effect of preventing magnesium silicate scale was examined by means of an apparatus set as shown in Fig. 4.

In Fig. 4, 11 denotes a coiled pipe for testing, 12 denotes a thermostat, 13 denotes a circulating pump, 14 denotes a stirrer, 15 denotes the test water, 16 denotes a heater, 17 denotes a thermosensor, 18 denotes a pit for the test water, and 19 denotes a thermoregulator.

The test was performed by introducing the test water 15 into the pit 18, circulating the test water inside the coiled pipe 11 by means of the pump 13, maintaining the test water at a constant temperature for a prescribed time, picking up the coiled pipe, and determining the weight W2 (g) of the coiled pipe dried. The amount of scales formed on the coiled pipe was calculated from the difference (W2 - W1), W1 (g) being the weight of the coiled pipe determined before the test.

The test water was prepared by adding sodium silicate (9 $H_2O$), magnesium sulfate (7 $H_2O$), sodium hydrogen carbonate and sulfuric acid to 4ℓ of pure water so that $Mg^{2+}$ = 250 ppm, $SiO_2$ = 500 ppm and pH = 8.5 in the resulting water. Using this test water, the test was performed under conditions of the temperature of circulating water at 40°C, the temperature of water in the thermostat at 25°C and the time of testing for 5 hours.

Each test sample was added to the test water and its effect was examined. The results obtained are shown in Table 11, together with those of referential examples.

Preparative examples 14 - 18 (Preparation of test samples of gluten partial degradation products by alkali)

To 100 g of a solution prepared by dissolving 1 - 4g of sodium hydroxide in pure water was added 20g of gluten (reagent grade from Wako Pure Cheimcals Ltd.). After dissolving the gluten by stirring well, the solution was subjected to hydrolysis reaction in a flask or an autocalve by heating at a temperature of 80 - 120°C for 30 -360 minutes under stirring. Then, the reaction mixture was neutralized with hydrochloric acid and diluted with pure water into a total amount of 200g, whereby the test sample was obtained. With respect to the test samples Nos. 14 - 18 thus obtained, conditions for the partial degradation and weight average molecular weight by GPC method are shown in Table 8.

Table 8
(Conditions for partial degradation of gluten by alkali)

| Test Sample No. | Sodium Hydroxide (g) [1] | Temperature (°C) | Time (minutes) | Average Molecular Weight |
|---|---|---|---|---|
| 14 | 1 | 80 | 30 | 72,000 |
| 15 | 1 | 100 | 30 | 61,000 |
| 16 | 2 | 100 | 60 | 47,000 |
| 17 | 4 | 100 | 60 | 20,200 |
| 18 | 4 | 120 | 360 | 4,500 |

1) Amount added to 20g gluten

Preparative examples 19 - 23 (Preparation of test samples of gluten partial degradation products by acid)

To 100 g of a solution prepared by adding hydrochloric acid to pure water in an amount of 0.4 - 4g of hydrogen chloride, was added 20g of gluten (reagent grade from Wako Pure Chemicals Ltd.). After dissolving the gluten by stirring well, the solution was heated in a flask at 80 or 100°C for 30 or 60 minutes under stirring. Then, the resulting mixture was neutralized with sodium hydroxide and diluted with pure water into a total weight of 200g, whereby the test sample was obtained. With respect to the test samples Nos. 19 - 23 thus obtained, conditions for the partial degradation and weight average molecular weights are shown in Table 9.

17

T a b l e   9
(Conditions for partial degradation
of gluten by acid)

| Test Sample No. | Amount of Hydrogen Chloride 1) (g) | Temperature (°C) | Time (minutes) | Average Molecular Weight |
|---|---|---|---|---|
| 19 | 0.4 | 80 | 30 | 108,000 |
| 20 | 0.4 | 100 | 60 | 99,000 |
| 21 | 1 | 100 | 60 | 91,000 |
| 22 | 2 | 100 | 60 | 64,000 |
| 23 | 4 | 100 | 60 | 47,000 |

1) Amount added to 20g gluten

Preparative example 24 (Preparation of test samples of gluten partial degradation products by enzyme)

To 150g of 0.1N aqueous hydrochloric acid was added 20g of gluten (reagent grade from Wako Pure Chemicals Ltd.) to obtain an aqueous solution of pH 1.5. The solution was taken in a flask and 0.2g of pepsin was added. The reaction was performed at 37°C for 90 minutes. Then, the reaction mixture was neutralized with sodium hydroxide and diluted with pure water into a total weight of 200g, whereby the test sample No. 24 was obtained. Weight average molecular weight of the partial degradation product was 60,000.

Preparative example 25 (Preparation of test samples of gluten partial degradation products by reducing

18

agent)

To a solution prepared by dissolving 4g of sodium sulfite in 100g of pure water was added 20g of gluten (reagent grade from Wako Pure Chemicals Ltd.), and degradation was performed at 30°C for 60 minutes under stirring. Then, the resulting mixture was diluted with pure water into a total weight of 200g, whereby the test sample No. 25 was obtained. Weight average molecular weight of the partial degradation product was 79,000.

Preparative examples 26 - 33 (Combined application to gluten of a partial degradation by acid and a partial degradation by alkali)

To 100g of the aqueous solution of each of the test samples Nos. 20 - 23 (partial degradation products by acid) was added 1 or 2g of sodium hydroxide. After mixed well, the solution was subjected to hydrolysis reaction by heating in a flask or an autoclave at 100°C or 120°C for 30 - 360 minutes under stirring. Then, the reaction mixture was neutralized with hydrochloric acid and diluted with pure water into a total weight of 200g, whereby the test sample was obtained. With respect to the test samples Nos. 26 - 44 thus obtained, conditions for the partial degradation and weight average molecular weights are shown in Table 10.

T a b l e   10
(Conditions for partial degradation by alkali of a gluten partial degradation product by acid)

| Test Sample No. | No. of Test Sample Used (Degradation Product by Acid) | Sodium Hydroxide 1) (g) | Temperature (°C) | Time (minutes) | Average Molecular Weight |
|---|---|---|---|---|---|
| 26 | 20 | 1 | 100 | 30 | 45,000 |
| 27 | 21 | 1 | 100 | 60 | 41,000 |
| 28 | " | 2 | 100 | 60 | 16,500 |
| 29 | " | 2 | 120 | 360 | 2,900 |
| 30 | 22 | 1 | 100 | 60 | 22,000 |
| 31 | 23 | 1 | 100 | 60 | 18,600 |
| 32 | " | 2 | 100 | 360 | 4,700 |
| 33 | " | 2 | 120 | 360 | 1,700 |

1) Amount added to 100g of preliminary preparation by HCl.

Preparative examples 34 - 35 (Combined application to gluten of a partial degradation by acid and a partial degradation by enzyme)

To 100g of the aqueous solution of the test sample No. 21 or the test sample No. 23 was added 50g of aqueous hydrochloric acid to adjust the pH of the solution of 1.5. Then, the solution was taken in a flask and 0.1g of pepsin was added to the solution. The reaction was performed at 37° C for 90 minutes. Then, the

EP 0 266 779 B1

reaction mixture was neutralized with sodium hydroxide and diluted with pure water into a total weight of 200g, whereby the test sample was obtained.

One obtained from the test sample No. 21 was treated as test sample No.34, and one from the test sample No. 23 as test sample No. 35. The test samples No. 34 and No. 35 had weight average molecular weights of 40,500 and 32,500, respectively.

Preparative example 36 (Combined application to gluten of a partial degradation by acid and a partial degradation by reducing agent)

To 50g of a solution prepared by dissolving 4g of sodium sulfite in pure water was added 100g of the aqueous solution of the test sample No. 21 (degradation product by acid), and stirred at 30°C for 60 minutes. Then, the resulting mixture was diluted with pure water into a total weight of 200g, whereby the test sample No. 36 was obtained. The weight average molecular weight of the test sample No. 36 was 56,000.

Preparative example 37 (Combined application to gluten of a partial degradation by enzyme and a partial degradation by alkali)

To 50g of a solution prepared by dissolving 0.5g of sodium hydroxide in pure water was added 100g of the aqueous solution of the test sample No. 24 (degradation product by enzyme), and heated at 100°C for 60 minutes under stirring. Then, the resulting mixture was neutralized with hydrochloric acid and diluted with pure water into a total weight of 200g, whereby the test sample No. 37 having a weight average molecular weight of 38,000 was obtained.

21

T a b l e   11

| | Material | Added Concentration (mg/$\ell$) | Scale formed (W2 - W1) (mg) |
|---|---|---|---|
| | Not added | 0 | 445 |
| Examples | Test Sample No.  1 | 25 | 152 |
| | "                14 | 25 | 91 |
| | "                15 | 25 | 53 |
| | "                16 | 25 | 24 |
| | "                17 | 25 | 32 |
| | "                18 | 25 | 58 |
| | "                19 | 25 | 145 |
| | "                20 | 25 | 137 |
| | "                21 | 25 | 30 |
| | "                22 | 25 | 34 |
| | "                23 | 25 | 183 |
| | "                24 | 25 | 120 |
| | "                25 | 25 | 78 |
| | "                26 | 25 | 15 |
| | "                27 | 25 | 11 |
| | "                | 10 | 37 |
| | "                | 5 | 78 |
| | "                | 2.5 | 112 |
| | "                28 | 25 | 35 |
| | "                29 | 25 | 78 |
| | "                30 | 25 | 36 |
| | "                | 10 | 72 |
| | "                | 5 | 134 |
| | "                31 | 25 | 152 |
| | "                32 | 25 | 233 |
| | "                33 | 25 | 220 |
| | "                34 | 25 | 22 |
| | "                35 | 25 | 159 |
| | "                36 | 25 | 20 |
| | "                37 | 25 | 18 |
| Referential Examples | Sodium  Alginate | 50 | 407 |
| | Gelatin | 50 | 431 |
| | Casein | 50 | 429 |
| | Sodium Hexametaphophate | 25 | 281 |
| | Sodium Polyacrylate | 25 | 237 |

Thus, it is noted by this Example that generation of magnesium silicate scale is remarkably suppressed or prevented.

EXAMPLE 7 (Test (I) of preventing calcium silicate scale)

As the test water was used 3$\ell$ of tap water in Osaka-city, which was adjusted to have $Ca^{2+}$ = 67 ppm, $SiO_2$ = 267 ppm and pH = 10.0 by adding sodium silicate (9 $H_2O$), calcium chloride (2 $H_2O$) and hydrochloric acid.

The test water was introduced, 1$\ell$ into the pit for make-up water and 2$\ell$ into a glass tall beaker. A stainless steel heater (350 W, surface area : 57 cm$^2$ was dipped in the test water in the tall beaker, and the test water was allowed to boil by heating, while stirring by stirring wings at a rotation speed of 200 rpm. As the test water began to boil, boiling was continued, while supplying the test water continuously from the pit for make-up water in order to maintain the amount of the test water in the tall beaker at a constant level. When the whole test water was supplied from the pit for make-up water to the tall beaker, the test completed (Time of test : ca. 3.5 hours, Concentration ratio of test water as the test completed : 1.5 times). After completion of the test, the heater was picked up instantly and, after drying, its weight W2 (g) was

22

weighed. The amount of scales adhered to the heater was calculated from the difference (W2 - W1), W1 (g) being the weight of the heater before the test.

The test as described above was performed with the above test water, to which each of the test samples Nos. 16, 27, 29 and 31 was added. The results obtained are shown in Table 12, together with those of the referential examples.

Table 12

| | Material | Added Concentration (mg/ℓ) | Scale formed (W2 - W1) (mg) |
|---|---|---|---|
| Examples | Not added | 0 | 70.3 |
| | Test Sample No. 16 | 100 | 10.7 |
| | " 27 | 100 | 2.0 |
| | " | 50 | 17.5 |
| | " 29 | 100 | 14.3 |
| | " 31 | 100 | 9.4 |
| Referential Examples | Sodium Alginate | 200 | 68.7 |
| | Sodium Polyacrylate | 100 | 32.0 |

EXAMPLE 8 (Test (II) of preventing calcium silicate scale)

In an autoclave was introduced 2ℓ of test water, and a heater provided with protective pipe was dipped in the test water. The test water was heated with the heater. The outside of the autoclave was heat insulated.

As the liquid temperature reached 158°C (5 Kgf/cm), the outside of the autocalve was air-cooled to maintain the liquid temperature at 158 ± 2°C (the time required for elevating temperature : 50 minutes, the time of maintaining the temperature : 70 minutes, the total time : 120 minutes).

Then, the heater was put off and, as the liquid temperature was lowered to room temperature, the protective pipe was removed off from the heater. After drying, the weight W2 (g) of the protective pipe was measured. The amount of scales formed on the pipe was calculated from the difference (W2 - W1), W1 (g) being the weight of the protective pipe weighed prior to the test.

As the test water was used a water having $Ca^{2+}$ = 100 ppm, $SiO^2$ = 400 ppm and pH = 10.0, which was prepared by adding sodium silicate (9 $H_2O$), calcium chloride (2 $H_2O$) and hydrochloric acid to pure water. Each of the test samples Nos. 16, 27 and 37 was added to such test water.

The results obtained are shown in Table 13, together with those of the referential examples.

Table 13

| | Material | Added Concentration (mg / ℓ) | Scale formed (W2 - W1) (mg) |
|---|---|---|---|
| | Not added | 0 | 142 |
| Examples | Test Sample No. 16 | 200 | 56 |
| | Test Sample No. 27 | 200 | 49 |
| | Test Sample No. 37 | 200 | 68 |
| Referential Examples | Sodium Alginate | 400 | 140 |
| | Sodium Polyacrylate | 200 | 129 |

Thus, it is understood that formation of calcium silicate scale is suppressed or prevented remarkably according to the present invention.

EXAMPLE 9 (Test of preventing silica scale)

In an autoclave was introduced $2\ell$ of test water, and the test water was heated upto 183°C (10 Kgf/cm$^2$). After heating, the test water was flushed out into glass beaker. While maintaining the test water in the glass beaker at 98 - 100°C, the test water was circulated with pump through a test apparatus composed of ten glass pipes connected in series, each pipe having an inside diameter of 11 mm and a length of 20 cm. Then, the glass pipes were picked up and the weight W2 (g) of each pipe was measured after drying. The amount of scales formed inside each pipe was calculated from the difference (W2 - W1), W1 (g) being the weight of each pipe weighed before the test. Evaluation was effected by the mean value of the differences (W2 - W1) calculated with respect to the ten glass pipes.

As the test water was used a water having $SiO_2$ = 1000 ppm, $Cl^-$ = 1500 ppm and pH = 8.0, which was prepared by adding sodium silicate (9 $H_2O$), sodium chloride and sulfuric acid to pure water. The test time was 8 hours.

The results are shown in Table 14.

Table 14

| | Material | Added Concentration (mg/ℓ) | Mean scale amount (W2 - W1) (mg) |
|---|---|---|---|
| | Not added | 0 | 2.7 |
| Example | Test Sample No. 27 | 50 | 0.5 |
| Referential Example | Sodium Polyacrylate | 50 | 2.3 |

EXAMPLE 10 (Test (I) of preventing calcium carbonate scale)

Using the test sample of gluten, prepared in Preparative example 1 (in Example 1), the test samples of various gluten partial degradation products, prepared in Preparative examples 14 - 37 (in Example 6) and the test samples of maize gluten or soya bean protein partial degradation products, prepared according to the following prescriptions, the effect of preventing calcium carbonate scale was examined according to the following method. The results of tests are shown in Table 15.

Preparative example 38 (Preparation of test samples of maize gluten partial degradation product by alkali)

To 100g of a solution prepared by dissolving 4g of sodium hydroxide in pure water was added 20g of maize gluten (from Nihon Shokuhin Kako Ltd.). After stirring well, the solution was heated at 100°C for 60 minutes under stirring. Then, the resulting mixture was neutralized with hydrochloric acid and diluted with pure water into a total weight of 200g, whereby the test sample No. 38 having a weight average molecular weight of 11,800 was obtained.

Preparative example 39 (Combined application to maize gluten of a partial degradation by acid and a partial degradation by alkali)

To 100g of a solution containing 4g of hydrogen chloride was added 20g of the same maize gluten as used in Preparative example 38. The solution was heated at 100°C for 60 minutes under stirring, and then neutralized with sodium hydroxide and diluted with pure water into a total weight of 200g. To 100g of the aqueous solution thus obtained was added 2g of sodium hydroxide, and the solution was mixed well. Then, the solution was heated at 100°C for 360 minutes under stirring. The resulting mixture was neutralized with hydrochloric acid and diluted with pure water into a total weight of 200g, whereby the test sample No. 39 having a weight average molecular weight of 96,000 was obtained.

Preparative example 40 (Combined application to soya bean of a partial degradation by acid and a partial degradation by alkali)

Using soya bean protein prepared by defatting a commercially available dried soya bean curds with acetone, as the starting material, the partial degradation treatments with acid and alkali were performed under the same conditions as employed in Preparative example 39, whereby the test sample No. 40 having a weight average molecular weight of 9,800 was obtained.

Test method

A test water having a calcium ion concentration of 100 ppm and an M alkalinity of 600 ppm was prepared by adding calcium chloride (2 $H_2O$) and sodium bicarbonate to pure water. To 1ℓ of the test water was added each test sample in a prescribed concentration, and the liquor as maintained at a constant temperature of 60°C for 2 hours while stirring at 200 rpm by means of a magnetic stirrer. Then, the test liquor was filtrated with a filter paper (Toyo Roshi Company Ltd., No. 6), and the calcium ion concentration of the filtrate was measured.

From the difference in the calcium ion concentration between the test liquor before the test and that after the test, the amount of the calcium ions precipitated in the course of the test was pursued, and further the amount of scales as calcium carbonate ($CaCO_3$) generated per 1ℓ of the test liquor was calculated.

Table 15

| | Material | | Concentration (mg/ℓ) | Ca carbonate scale formed (mg/ℓ) |
|---|---|---|---|---|
| Examples | Test Sample No. | 1 | 3 | 32 |
| | " | 16 | 3 | 18 |
| | " | 17 | 3 | 12 |
| | " | 18 | 3 | 14 |
| | " | 21 | 3 | 20 |
| | " | 23 | 3 | 18 |
| | " | 24 | 3 | 18 |
| | " | 25 | 3 | 13 |
| | " | 27 | 3 | 25 |
| | " | 31 | 3 | 11 |
| | " | 32 | 1 | 58 |
| | " | | 2 | 35 |
| | " | | 3 | 9 |
| | " | 34 | 3 | 20 |
| | " | 35 | 3 | 21 |
| | " | 36 | 3 | 18 |
| | " | 37 | 3 | 17 |
| | " | 38 | 3 | 17 |
| | " | 39 | 3 | 11 |
| | " | 40 | 3 | 14 |
| Referential examples | Not added | | 0 | 220 |
| | Sodium Alginate | | 5 | 162 |
| | Gelatin | | 5 | 218 |
| | Sodium Polyacrylate (M. W. ca. 8,000) | | 3 | 12 |

EXAMPLE 11 (Test (II) of preventing calcium carbonate scale)

The test water used here was prepared by adding calcium chloride (2 $H_2O$) and sodium bicarbonate to tap water in Osaka-city so that the calcium hardness is 250 ppm and the M alkalinity is 600 ppm in the resulting water. In a tall beaker having a volume of 2ℓ was introduced 2ℓ of the test water containing each test sample in a prescribed concentration, and the test solution was heated at 60°C ± 2°C for 3 hours by means of a heater (made of SUS 304, having a diameter of 12 mm and a length of 250 mm, and whose heating part has a length of 160 mm and works at 100V - 350W) under stirring by stirring wings. Then, the heater was picked up and the calcium carbonate scale was washed out with acid. From the results of analysis of calcium in the acid washings, the amount of formed calcium carbonate was calculated.

26

Table 16

| | Material | | Concentration (mg/ℓ) | Ca carbonate scale formed (mg) |
|---|---|---|---|---|
| | Not added | | 0 | 95.0 |
| Examples | Test Sample No. 17 | | 5 | 12.0 |
| | " | " | 2 | 13.5 |
| | " | " | 1 | 21.0 |
| | " | No. 23 | 5 | 15.8 |
| | " | " | 2 | 22.5 |
| | " | " | 1 | 30.0 |
| | " | No. 24 | 5 | 19.1 |
| | " | No. 25 | 5 | 20.0 |
| | " | No. 31 | 5 | 8.0 |
| | " | " | 2 | 13.5 |
| | " | " | 1 | 16.0 |
| | " | No. 36 | 5 | 16.1 |
| | " | No. 37 | 5 | 9.7 |
| | " | No. 38 | 5 | 13.3 |
| | " | " | 2 | 15.7 |
| | " | No. 39 | 5 | 9.6 |
| | " | " | 2 | 14.4 |
| | " | " | 1 | 19.6 |
| | " | No. 40 | 5 | 17.0 |
| | " | " | 2 | 23.7 |
| | " | " | 1 | 28.8 |
| Referential Examples | Sodium Alginate | | 10 | 90.8 |
| | Gelatin | | 10 | 101.7 |
| | Sodium Polyacrylate | | 5 | 1.1 |
| | " | | 2 | 11.7 |

EXAMPLE 12 (Test of preventing zinc phosphate scale)

Using test samples prepared in various Preparative examples mentioned above, the effect of preventing zinc phosphate scale was examined according to the following test method. The results are shown in Table 18.

Test method

The anti-scaling effect of a combined use of the anti-scaling agent of the present invention with an anti-corrosive agent was examined.

As the test water was used 1 ℓ of 3-fold concentrated tap water of Osaka-city, and each test sample was added to the test water in a prescribed concentration. A soft steel plate (SPCC; 30 × 50 × 1 mm) attached to the stirring rod made of stainless steel was dipped in the test solution, and the stirring was continued for 5 days at 100 rpm, while maintaining the solution at a constant temperature of 50°C.

Then, the amount of precipitated zinc and the amount of the total phosphoric acid were pursued in the same manner as Example 10, and the sum of the two was calculated and defined as the zinc phosphate scale.

The conditions of the test water are shown in Table 17.

Table 17

| pH | 7.50 |
|---|---|
| Electric Conductivity ($\mu$S/cm) | 750 |
| P Alkalinity (mg/$\ell$) | 0 |
| M Alkalinity (mg/$\ell$) | 61.5 |
| Calcium Hardness (mg/$\ell$) | 98.6 |
| Total Hardness (mg/$\ell$) | 157.0 |
| Sulfate Ion (mg/$\ell$) | 39.5 |
| Chloride Ion (mg/$\ell$) | 69.1 |
| Silica ($SiO_2$) (mg/$\ell$) | 10.5 |
| Total Iron (mg/$\ell$) | 0.5 |

Table 18

| | Material | Concentration (mg/$\ell$) | Anticorrosive Agent | Zinc Phosphate scale formed (mg/$\ell$) |
|---|---|---|---|---|
| Examples | Test Sample No. 23 | 5 | Sodium Hexameta phosphate (20 mg/$\ell$) and Zinc Sulfate (20 mg/$\ell$) | 8 |
| | Test Sample No. 32 | 5 | | 4 |
| | Test Sample No. 35 | 5 | | 11 |
| | Test Sample No. 39 | 5 | | 12 |
| Referential Examples | Not added | -- | | 36 |
| | Sodium Polyacrylate (M. W. ca. 8,000) | 5 | | 18 |

Claims

1. Use of a partial degradation product of wheat gluten, maize gluten or soya bean protein, having a weight average molecular weight of 700 to 110,000 and having a ratio of Mw after degradation (Mw2) to Mw before degradation (Mw1) of from 0.005 to 0.85 as scale inhibitor.

2. The use of claim 1 , wherein the partial degradation product is one obtained by subjecting a grain protein to a partial degradation treatment with an alkali, an acid, an enzyme, a reducing agent or an oxidizing agent.

3. The use of claim 1, wherein the partial degradation product is one obtained by subjecting a grain protein to a partial degradation treatment consisting of a combination of (A) a degradation treatment with an alkali and (B) one or more of degradation treatments with an acid, an enzyme, a reducing agent or an oxidizing agent.

4. The use of claims 1 to 3 for preventing scales in a high-temperature water system.

5. The use of claim 4, wherein the high-temperature water system has a temperature of 80 to 250° C.

6. The use of claim 4, wherein the high-temperature water system has a temperature of 100 to 200° C.

7. The use of claim 4, wherein the high-temperature water system is a boiler water system.

8. The use of claim 4, wherein the high-temperature water system is a water system of an apparatus for converting sea water into fresh water.

9. The use of claim 4, wherein the high-temperature water system is a water system of an apparatus utilizing hydrothermal water.

10. The use of claims 1 to 3 for preventing scales in a low-temperature water system.

11. The use of claim 10, wherein the low-temperature water system is a general cooling water system.

12. The use of claims 1 to 3 for preventing calcium and/or magnesium scales.

13. The use of claims 1 to 3 for preventing silicate scales such as calcium silicate scale, magnesium silicate scale and/or silicic acids scale.

**Revendications**

1. Utilisation d'un produit de dégradation partielle de gluten de blé, de gluten de maïs ou de protéine de soja, ayant un poids moléculaire moyen en poids de 700 à 110.000 et ayant un rapport de $PM_p$ après dégradation ($PM_{p2}$) à $PM_p$ avant dégradation ($PM_{p1}$) de 0,005 à 0,85 en tant qu'inhibiteur de tartre.

2. Utilisation suivant la revendication 1, caractérisée en ce que le produit de dégradation partielle est un produit obtenu par soumission d'une protéine de grain à un traitement de dégradation partielle avec un alcali, un acide, une enzyme, un agent réducteur ou un agent oxydant.

3. Utilisation suivant la revendication 1, caractérisée en ce que le produit de dégradation partielle est un produit obtenu par soumission d'une protéine de grain à un traitement de dégradation partielle consistant en une combinaison de (A) un traitement de dégradation avec un alcali et (B) un ou plusieurs traitements de dégradation avec un acide, une enzyme, un agent réducteur ou on agent oxydant.

4. Utilisation suivant l'une quelconque des revendications 1 à 3, caractérisée en ce qu'elle empêche la formation de tartre dans un système d'eau à haute température.

5. Utilisation suivant la revendication 4, caractérisée en ce que le système d'eau à haute température a une température de 80 à 250° C.

6. Utilisation suivant la revendication 4, caractérisée en ce que le système d'eau à haute température a une température de 100 à 200° C.

7. Utilisation suivant la revendication 4, caractérisée en ce que le système d'eau à haute température est on système d'eau de chaudière.

8. Utilisation suivant la revendication 4, caractérisée en ce que le système d'eau à haute température est un système d'eau d'une installation pour convertir l'eau de mer en eau douce.

**9.** Utilisation suivant la revendication 4, caractérisée en ce que le système d'eau à haute température est un système d'eau d une installation utilisant de l'eau hydrothermique.

**10.** Utilisation suivant l'une quelconque des revendications 1 à 3, caractérisée en ce qu'elle empêche la formation de tartre dans un système d'eau à basse température.

**11.** Utilisation suivant la revendication 10, caractérisée en ce que le système d'eau à basse température est un système général d'eau de réfrigération.

**12.** Utilisation suivant l'une quelconque des revendications 1 à 3, caractérisée en ce qu'elle empêche la formation de tartres de calcium et/ou de magnésium.

**13.** Utilisation suivant l'une quelconque des revendications 1 à 3, caractérisée en ce qu'elle empêche la formation de tartres de silicate comme le tartre de silicate de calcium, le tartre de silicate de magnésium et/ou le tartre d'acides siliciques.

**Patentansprüche**

**1.** Verwendung eines teilweisen Abbauprodukts von Weizengluten, Maisgluten oder Sojabohnenprotein mit einem gewichtsdurchschnittlichen Molekulargewicht von 700 bis 110.000, das ein Verhältnis des MG nach dem Abbau (MG2) zu dem MG vor dem Abbau (MG1) von 0,005 bis 0,85 aufweist, als Kesselstein- bzw. Belaginhibitor.

**2.** Verwendung nach Anspruch 1, dadurch **gekennzeichnet,** daß das teilweise Abbauprodukt ein solches ist, das dadurch erhalten worden ist, daß ein Kornprotein einer teilweisen Abbaubehandlung mit einem Alkali, einer Säure, einem Enzym, einem Reduktionsmittel oder einem Oxidationsmittel unterworfen worden ist.

**3.** Verwendung nach Anspruch 1, dadurch **gekennzeichnet,** daß das teilweise Abbauprodukt ein solches ist, das dadurch erhalten worden ist, daß ein Kornprotein einer teilweisen Abbaubehandlung, bestehend aus einer Kombination von (A) einer Abbaubehandlung mit einem Alkali und (B) ein oder mehreren Abbaubehandlungen mit einer Säure, einem Enzym, einem Reduktionsmittel oder einem Oxidationsmittel, unterworfen worden ist.

**4.** Verwendung nach den Ansprüchen 1 bis 3 zur Verhinderung von Kesselsteinen bzw. Ablagerungen in einem Hochtemperatur-Wassersystem.

**5.** Verwendung nach Anspruch 4, dadurch **gekennzeichnet,** daß das Hochtemperatur-Wassersystem eine Temperatur von 80 bis 250°C hat.

**6.** Verwendung nach Anspruch 4, dadurch **gekennzeichnet,** daß das Hochtemperatur-Wassersystem eine Temperatur von 100 bis 200°C hat.

**7.** Verwendung nach Anspruch 4, dadurch **gekennzeichnet,** daß das Hochtemperatur-Wassersystem ein Boiler-Wassersystem ist.

**8.** Verwendung nach Anspruch 4, dadurch **gekennzeichnet,** daß das Hochtemperatur-Wassersystem ein Wassersystem einer Vorrichtung zur Umwandlung von Meerwasser in Frischwasser ist.

**9.** Verwendung nach Anspruch 4, dadurch **gekennzeichnet,** daß das Hochtemperatur-Wassersystem ein Wassersystem einer Vorrichtung ist, die hydrothermales Wasser verwendet.

**10.** Verwendung nach den Ansprüchen 1 bis 3 zur Verhinderung von Kesselsteinen bzw. Ablagerungen in einem Niedertemperatur-Wassersystem.

**11.** Verwendung nach Anspruch 10, dadurch **gekennzeichnet,** daß das Niedertemperatur-Wassersystem ein allgemeines Kühlwassersystem ist.

**12.** Verwendung nach den Ansprüchen 1 bis 3 zur Verhinderung von Calcium- und/oder Magnesium-Kesselsteinen bzw. -Ablagerungen.

**13.** Verwendung nach den Ansprüchen 1 bis 3 zur Verhinderung von Silicat-Kesselsteinen bzw. -Ablagerungen, wie Calciumsilicat-Kesselstein, Magnesiumsilicat-Kesselstein und/oder Kieselsäure-Kesselstein.

# FIG. 1

Test Sample No.9

pH vs 1N-NaOH (ml)

# FIG. 2

Test Sample No.1

pH vs 1N-NaOH (ml)

# FIG. 3

# FIG. 4